(19) Europäisches Patentamt
European Patent Office
Office européen des brevets

(11) **EP 3 480 969 A1**

(12) **EUROPEAN PATENT APPLICATION**
published in accordance with Art. 153(4) EPC

(43) Date of publication:
**08.05.2019 Bulletin 2019/19**

(51) Int Cl.:
***H04B 7/06*** (2006.01)

(21) Application number: **17838461.6**

(22) Date of filing: **29.06.2017**

(86) International application number:
**PCT/CN2017/090805**

(87) International publication number:
**WO 2018/028331 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.08.2016 CN 201610652565**

(71) Applicant: **Huawei Technologies Co., Ltd.**
**Longgang District**
**Shenzhen, Guangdong 518129 (CN)**

(72) Inventors:
• WU, Ye
  Shenzhen
  Guangdong 518129 (CN)
• LIU, Yong
  Shenzhen
  Guangdong 518129 (CN)
• BI, Xiaoyan
  Shenzhen
  Guangdong 518129 (CN)

(74) Representative: **Körber, Martin Hans**
**Mitscherlich PartmbB**
**Patent- und Rechtsanwälte**
**Sonnenstrasse 33**
**80331 München (DE)**

(54) **DATA SENDING AND RECEIVING METHOD AND DEVICE**

(57) This application provides a data sending method, a data receiving method, a data sending apparatus, and a data receiving apparatus. The method includes: precoding, by a transmit end device, a plurality of spatial flows, to obtain a plurality of precoded data streams, and transmitting the plurality of precoded data streams, where at least two spatial flows in the plurality of spatial flows are obtained by performing transmit diversity processing on one original spatial flow. In this way, some spatial flows in a plurality of spatial flows on a same time-frequency resource can be transmitted in a transmit-diversity-based beamforming transmission manner, and other spatial flows can be transmitted in a spatial multiplexing manner, thereby improving time-frequency resource utilization.

Precode a plurality of spatial streams, to obtain a plurality of precoded data streams, where at least two spatial streams in the plurality of spatial streams are obtained by performing transmit diversity processing on one original spatial stream — 101

Transmit the plurality of precoded data streams — 102

FIG. 2

EP 3 480 969 A1

## Description

## TECHNICAL FIELD

This application relates to communications technologies, and in particular, to a data sending method, a data receiving method, a data sending apparatus, and a data receiving apparatus.

## BACKGROUND

In a Long Term Evolution (Long Term Evolution, LTE for short) or a Long Term Evolution-advanced (Long Term Evolution-advanced, LTE-A for short) system, a multiple-input multiple-output (Multiple Input Multiple Output, MIMO for short) technology is used. In the MIMO technology, a plurality of antennas are deployed on a transmit end device and a receive end device, so that performance of a wireless communications system can be remarkably improved. For example, in a diversity scenario, the MIMO technology can effectively improve transmission reliability; and in a multiplexing scenario, the MIMO technology can improve a transmission throughput manyfold.

In the diversity scenario, a base station usually transmits data by using an open loop transmit diversity (Open loop transmit diversity, OLTD for short) method, where cell-level transmit diversity coverage can be formed through OLTD to provide reliable signal quality for user equipment (User Equipment, UE for short) in a cell. However, a same time-frequency resource can be used by only one UE, and other UEs cannot use the time-frequency resource, leading to a time-frequency resource waste.

## SUMMARY

This application provides a data sending method, a data receiving method, a data sending apparatus, and a data receiving apparatus, so that time-frequency resource utilization can be improved.

According to a first aspect of this application, a data sending method is provided, including: precoding, by a transmit end device, a plurality of spatial flows, to obtain a plurality of precoded data streams, and transmitting the plurality of precoded data streams. At least two spatial flows in the plurality of spatial flows are obtained by performing transmit diversity processing on one original spatial flow. In this way, some spatial flows in a plurality of spatial flows on a same time-frequency resource can be transmitted in a transmit-diversity-based beamforming transmission manner, and other spatial flows can be transmitted in a spatial multiplexing manner, thereby improving time-frequency resource utilization.

Further, the method further includes: precoding, by the transmit end device, demodulation reference signals of the plurality of spatial flows, to obtain a plurality of precoded demodulation reference signals, and sending the plurality of precoded demodulation reference signals. Each spatial flow corresponds to one demodulation reference signal, and a precoding vector used by each spatial flow is the same as a precoding vector used by the demodulation reference signal of each spatial flow.

According to a second aspect of this application, a data receiving method is provided, including: receiving, by a receive end device, a plurality of precoded data streams, where the plurality of precoded data streams are obtained by precoding a plurality of spatial flows, and at least two spatial flows in the plurality of spatial flows are obtained by performing transmit diversity processing on one original spatial flow; and then restoring the at least two spatial flows from the plurality of precoded data streams, and restoring the original spatial flow based on the at least two spatial flows.

Further, the method further includes: receiving a plurality of precoded demodulation reference signals, where the plurality of precoded demodulation reference signals are obtained by precoding demodulation reference signals of the plurality of spatial flows, each spatial flow corresponds to one demodulation reference signal, and a precoding vector used by each spatial flow is the same as a precoding vector used by the demodulation reference signal of each spatial flow; and correspondingly, restoring, by the receive end device, the at least two spatial flows from the plurality of precoded data streams based on precoded demodulation reference signals of the at least two spatial flows.

According to a third aspect of this application, a data sending apparatus is provided, including: a processing module and a sending module. The processing module is configured to precode a plurality of spatial flows, to obtain a plurality of precoded data streams. The sending module is configured to transmit the plurality of precoded data streams. At least two spatial flows in the plurality of spatial flows are obtained by performing transmit diversity processing on one original spatial flow.

Further, the processing module is further configured to precode demodulation reference signals of the plurality of spatial flows, to obtain a plurality of precoded demodulation reference signals, and the sending module is further configured to send the plurality of precoded demodulation reference signals. Each spatial flow corresponds to one demodulation reference signal, and a precoding vector used by each spatial flow is the same as a precoding vector used by the demodulation reference signal of each spatial flow.

According to a fourth aspect of this application, a data receiving apparatus is provided, including: a receiving module and a processing module. The receiving module is configured to receive a plurality of precoded data streams, where the plurality of precoded data streams are obtained by precoding a plurality of spatial flows, and at least two spatial flows in the plurality of spatial flows are obtained by performing transmit diversity processing on one original spatial flow. The processing module is configured to: restore the at least two spatial flows from the plurality of precoded data streams, and restore the original spatial flow based on the at least two spatial flows.

Further, the receiving module is further configured to receive a plurality of precoded demodulation reference signals, where the plurality of precoded demodulation reference signals are obtained by precoding demodulation reference signals of the plurality of spatial flows, each spatial flow corresponds to one demodulation reference signal, and a precoding vector used by each spatial flow is the same as a precoding vector used by the demodulation reference signal of each spatial flow. Correspondingly, the processing module is specifically configured to restore the at least two spatial flows from the plurality of precoded data streams based on precoded demodulation reference signals of the at least two spatial flows.

Optionally, in the methods and the apparatuses provided in the first aspect to the fourth aspect of this application, the original spatial flow corresponds to a first receive end device.

Optionally, in the methods and the apparatuses provided in the first aspect to the fourth aspect of this application, at least one spatial flow in the plurality of spatial flows corresponds to a second receive end device.

Optionally, in the methods and the apparatuses provided in the first aspect to the fourth aspect of this application, at least two spatial flows in the plurality of spatial flows are obtained by performing transmit diversity processing on another original spatial flow, and the another original spatial flow corresponds to a third receive end device.

Optionally, in the methods and the apparatuses provided in the first aspect to the fourth aspect of this application, the transmit diversity processing is space-time transmit diversity processing, space-frequency transmit diversity processing, or space-time-frequency transmit diversity processing.

Optionally, in the methods and the apparatuses provided in the first aspect to the fourth aspect of this application, different spatial flows correspond to different precoding vectors, each precoding vector corresponds to one DMRS port, and different precoding vectors correspond to different DMRS ports.

According to the data sending method, the data receiving method, the data sending apparatus, and the data receiving apparatus that are provided in this application, the transmit end device precodes the plurality of spatial flows, to obtain the plurality of precoded data streams, and transmits the plurality of precoded data streams, where at least two spatial flows in the plurality of spatial flows are obtained by performing transmit diversity processing on one original spatial flow. In this way, some spatial flows in a plurality of spatial flows on a same time-frequency resource can be transmitted in a transmit-diversity-based beamforming transmission manner, and other spatial flows can be transmitted in a spatial multiplexing manner, thereby improving time-frequency resource utilization.

## BRIEF DESCRIPTION OF DRAWINGS

FIG. 1 is a schematic diagram of a downlink physical channel processing procedure used in an existing LTE system;
FIG. 2 is a flowchart of a data sending method according to Embodiment 1 of this application;
FIG. 3 is a flowchart of a data receiving method according to Embodiment 2 of this application;
FIG. 4 is a schematic structural diagram of a data sending apparatus according to Embodiment 3 of this application;
FIG. 5 is a schematic structural diagram of a data receiving apparatus according to Embodiment 4 of this application;
FIG. 6 is a schematic structural diagram of a data sending apparatus according to Embodiment 5 of this application; and
FIG. 7 is a schematic structural diagram of a data receiving apparatus according to Embodiment 7 of this application.

## DESCRIPTION OF EMBODIMENTS

Methods in this application may be applied to a MIMO system, for example, an LTE system or an LTE-A system. In the MIMO system, a plurality of antennas are deployed on a transmit end device and a receive end device, so that performance of a wireless communications system can be remarkably improved. For example, in a diversity scenario, the MIMO technology can effectively improve transmission reliability; and in a multiplexing scenario, the MIMO technology can improve a transmission throughput manyfold.

An important branch of the MIMO technology is precoding. In a precoding technology, a to-be-transmitted signal is processed by using a precoding matrix that matches an attribute of a channel, so that a precoded to-be-transmitted signal is adapted to the channel. Therefore, a transmission process is optimized, and received signal quality (for example, a signal to interference plus noise ratio, Signal to Interference plus Noise Ratio, SINR for short) is improved. Currently, the precoding technology is adopted in a plurality of wireless communications standards, including but not limited to an LTE system.

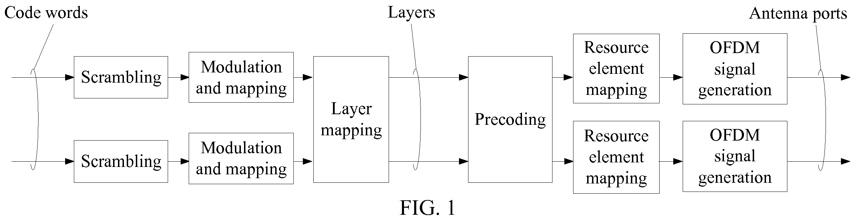

FIG. 1 is a schematic diagram of a downlink physical channel processing procedure used in an existing LTE system. A to-be-processed object in the downlink physical channel processing procedure is a code word, and the code word is generally a bit stream on which coding (including at least channel coding) has been performed. The code word is scrambled to generate a scrambled bit stream. The scrambled bit stream is modulated and mapped, to obtain a modulated symbol stream. Layer mapping is performed on the modulated symbol stream, and the modulated symbol is mapped to a plurality of symbol layers (also referred to as spatial flows or spatial layers). Precoding is performed on the symbol layers to obtain a plurality of precoded symbol streams. Resource element mapping is performed on the precoded symbol streams, so that the precoded symbol streams are mapped to a plurality of resource elements. Subsequently, the resource elements experience an orthogonal frequency division multiplexing (Orthogonal Frequency Division Multiplexing, OFDM for short) signal generation stage (for example, IFFT), to obtain an OFDM symbol stream. Subsequently, the OFDM symbol stream is transmitted through an antenna port.

An important application of the MIMO technology is transmit diversity. In the transmit diversity, redundancy transmission is performed on an original signal (for example, a symbol) in a time dimension, a frequency dimension, a space dimension (for example, an antenna), or various combinations of the three dimensions, to improve transmission reliability. In a specific implementation process, a quantity of redundancy transmissions may be set based on a channel model or channel quality, and a redundancy transmission object may be an original signal, or may be an original signal on which processing has been performed, where the processing may include, for example but not limited to, processing such as delaying, negation, conjugating, and rotating, and processing that is obtained after the foregoing types of processing are derived, evolved, and combined.

Currently, common transmit diversity includes, for example but not limited to, diversity manners such as space-time transmit diversity (Space-Time Transmit Diversity, STTD), space-frequency transmit diversity (Space-Frequency Transmit Diversity, SFTD), time switched transmit diversity (Time Switched Transmit Diversity, TSTD), frequency switched transmit diversity (Frequency Switch Transmit Diversity, FSTD), and orthogonal transmit diversity (Orthogonal Transmit Diversity, OTD), and diversity manners that are obtained after the foregoing diversity manners are derived, evolved, and combined.

The foregoing provides a general description of transmit diversity by way of example. A person skilled in the art should understand that in addition to the foregoing examples, the transmit diversity is further implemented in a plurality of other manners. Therefore, the foregoing description should not be construed as a limitation on the technical solutions of this application, but the technical solutions of this application should be understood as being applicable to all possible transmit diversity schemes.

The transmit diversity may be classified, based on whether channel state information (Channel State Information) fed back by a receive end device is relied on or not, into CSI-independent open loop transmit diversity (Open loop transmit diversity, OLTD for short) and CSI-dependent closed loop transmit diversity. An LTE system and an LTE-A system use OLTD, and cell-level coverage is formed through OLTD. UE using an OLTD transmission scheme exclusively uses a time-frequency resource, and other UE cannot share the time-frequency resource through spatial multiplexing, leading to a time-frequency resource waste.

To resolve the prior-art problem, an embodiment of this application provides a data sending method, so that spatial multiplexing can be performed when a transmit diversity technology is used, thereby improving time-frequency resource utilization.

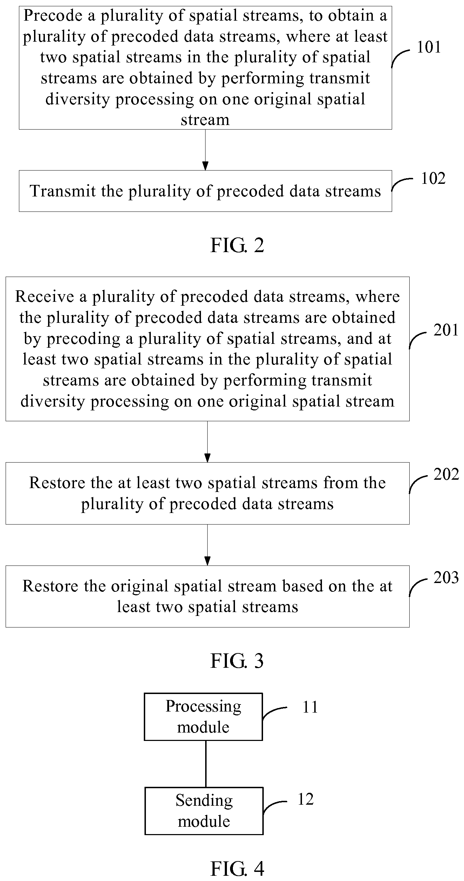

FIG. 2 is a flowchart of a data sending method according to Embodiment 1 of this application. The method in this embodiment is performed by a transmit end device. The transmit end device may be a base station or UE. As shown in FIG. 2, the method in this embodiment includes the following steps:

Step 101: Precode a plurality of spatial flows, to obtain a plurality of precoded data streams, where at least two spatial flows in the plurality of spatial flows are obtained by performing transmit diversity processing on one original spatial flow.
Step 102: Transmit the plurality of precoded data streams.

In an existing LTE/LTE-A system, a spatial flow is a data layer that is obtained after layer mapping. The data layer is also referred to as a data stream, a symbol stream, or a symbol layer. In this embodiment of this application, a transmit diversity processing operation is added between layer mapping and precoding. When the transmit end device sends data to a plurality of receive end devices, transmit diversity processing may be performed on some of spatial flows that are obtained after layer mapping, but not on the rest of the spatial flows that are obtained after layer mapping. Therefore, the plurality of spatial flows include spatial flows that are obtained through transmit diversity processing and the spatial flows on which transmit diversity processing is not performed. For the spatial flows that are obtained through transmit diversity processing, a spatial flow before the transmit diversity processing is referred to as an original spatial flow. In this embodiment of this application, the transmit diversity processing may be in a diversity manner, such as the foregoing STTD, SFTD, TSTD, FSTD, or OTD.

During MU-MIMO transmission, a precoding vector corresponding to a spatial flow may be designed as being orthogonal to a channel of another receiving device other than a target receiving device of the spatial flow, to cancel interference. A precoded data stream that is obtained through precoding is also referred to as a precoded symbol stream. For precoding in this application, refer to various precoding schemes used in an existing LTE standard, for example, a codebook-based precoding scheme and a non-codebook-based precoding scheme.

A precoding-based transmission process may be briefly represented by using the following formula:

$$r = HWs + n,$$

where

$r$ is a signal stream received by a receive end device, $H$ is a channel matrix, $W$ is a precoding matrix, $s$ is a spatial flow (also referred to as a symbol layer, a symbol stream, or a spatial layer), and $n$ is channel noise. In the foregoing formula, $HW$ is referred to as an equivalent channel matrix $H_{eff}$, and the equivalent channel matrix corresponds to a precoded channel. The equivalent channel matrix $H_{eff}$ may be estimated by using a demodulation reference signal (Demodulation reference signal, DMRS for short), because the DMRS and the spatial flow $s$ are precoded by using the same precoding matrix $W$. DMRSs are mapped to spatial flows in a one-to-one manner. Therefore, a quantity of DMRSs is usually equal to a quantity of spatial flows.

In a specific implementation process, it may be assumed that the noise represented by a noise vector $n_k$ is additive white Gaussian noise (Additive white Gaussian noise, AWGN for short). A receive end device $k$ may obtain, from a received signal stream vector $r_k$, an estimated value of a spatial flow vector $s_k$ sent by the transmit end device. A specific process thereof may be represented by using the following formula:

$$\hat{s}_k = G_k \cdot r_k,$$

where

$\hat{s}_k$ is the estimated value of the spatial flow vector $s_k$, and $G_k$ is an $L_k \times R_k$-order MIMO equalization matrix of the receive end device $k$. The MIMO equalization matrix $G_k$ may be calculated by using a plurality of receiving algorithms, for example but not limited to, zero-forcing (Zero-Forcing, ZF), minimum mean square error (Minimum Mean Square Error, MMSE), maximum likelihood (Maximum Likelihood, ML), maximum ratio combining (Maximal Ratio Combining, MRC), and successive interference cancellation (Successive Interference Cancellation, SIC). For example, if the ZF algorithm is used,

$$G_k = \left[ (H_k^e)^H \cdot H_k^e \right]^{-1} \cdot (H_k^e)^H,$$

where

$(x)^H$ represents a conjugate transpose operation, and different receiving algorithms may use different parameters. For example, some algorithms may need to use a variance of the noise vector $n_k$, in addition to the equivalent channel matrix $H_{eff}$. In addition, some algorithms may use other totally different parameters. Therefore,

equalization matrices $G_k$ obtained by using different receiving algorithms may be different. Moreover, in addition to calculation based on the foregoing formula, some steps in the foregoing process may be implemented in a table lookup manner.

In this embodiment, if transmit diversity processing performed on an original spatial flow is also considered as a type of precoding, the method in this embodiment is equivalent to performing two-level precoding on an original spatial flow on which layer mapping has been performed, and may be represented as Y = F1(F2(S)). F2 represents precoding (that is, transmit diversity processing) corresponding to transmit diversity, F1 represents beamforming (beamforming) precoding (that is, conventional precoding. For the conventional precoding, refer to precoding defined in the LTE standard), and S represents an original spatial flow. A quantity of ports used to finally send the precoded data streams varies with a transmit diversity processing manner. For example, when the transmit diversity processing manner is SFTD, the quantity of ports is 2; or when the transmit diversity processing manner is FSTD, the quantity of ports is 4.

In this embodiment, some spatial flows in the plurality of spatial flows may be spatial flows that are obtained through transmit diversity processing, and others may be spatial flows on which transmit diversity processing is not performed. In other words, both transmit diversity processing and precoding processing have been performed on some spatial flows, but only precoding processing has been performed on other spatial flows. A method for performing both transmit diversity processing and precoding processing on a spatial flow is referred to as a transmit-diversity-based beamforming transmission method below.

The method in this embodiment may be applied to a single-user MIMO (Single-user MIMO, SU-MIMO for short) scenario, or may be applied to a multi-user MIMO (Multi-user MIMO, MU-MIMO for short) scenario. When the method is applied to an SU-MIMO system, only particular UE is allowed to use some ports of a time-frequency resource to perform the transmit-diversity-based beamforming transmission method, and remaining ports cannot be allocated to other UEs. In other words, the original spatial flow corresponds to a first receive end device, and that the original spatial flow corresponds to the first receive end device means that a device for receiving an original data stream is the first receive end device. For example, on a same time-frequency resource, if UE 0 performs transmit-diversity-based beamforming transmission by using a port x and a port x+1, remaining ports cannot be allocated to other UEs, to avoid interference between data streams. Specifically, the UE 0 performs transmit diversity processing on an original spatial flow to obtain spatial flows, precodes the spatial flows to obtain precoded data streams, and transmits the precoded data streams by using the port x and the port x+1.

In an implementation, in the SU-MIMO scenario, some spatial flows in a plurality of spatial flows may be obtained by performing transmit diversity on an original spatial flow, and other spatial flows do not experience transmit diversity processing. There may be more than one original spatial flow and more than one spatial flow on which transmit diversity processing is not performed. Certainly, the plurality of spatial flows in the SU-MIMO scenario may all be spatial flows that are obtained through transmit diversity processing, and these spatial flows may correspond to one or more original spatial flows. In other words, the spatial flows that are precoded in step 101 are obtained by performing transmit diversity on one or more original spatial flows, and the original spatial flows correspond to same UE.

When the method is applied to the MU-MIMO scenario, the plurality of spatial flows correspond to a plurality of receive end devices. In a scenario, at least two spatial flows in the plurality of spatial flows are obtained by performing transmit diversity processing on one original spatial flow, and the original spatial flow corresponds to a first receive end device. The plurality of spatial flows include at least one spatial flow on which transmit diversity processing is not performed, and the spatial flow on which transmit diversity processing is not performed corresponds to a second receive end device. In this way, a same time-frequency resource is used for both transmit diversity and spatial multiplexing, thereby improving time-frequency resource utilization. It is assumed that: A base station has ports x, x+1, ..., and y in total, the first receive end device is UE 0, the second receive end device is UE 1, the UE 0 sends data by using the transmit-diversity-based beamforming transmission method, the UE 0 uses the ports x+1 and the port x+2, a transmit diversity processing manner used by the UE 0 is SFTD, remaining ports excluding the port x+1 and the port x+2 are allocated to UE 2, and the UE 2 performs transmission by using closed-loop spatial multiplexing (Closed-loop spatial multiplexing, CLSM for short). Therefore, in the MU-MIMO scenario, for a plurality of UEs in simultaneous scheduling, at least one UE performs data transmission by using the transmit-diversity-based beamforming transmission method. In addition, for the UE that performs data transmission by using the transmit-diversity-based beamforming transmission method, spatial flows of the UE may further include a spatial flow on which diversity processing is not performed. In conclusion, for one or more UEs in the plurality of UEs, spatial flows corresponding to the one or more UEs may include spatial flows that are obtained through transmit diversity, a spatial flow on which transmit diversity is not performed, or any combination of the foregoing two types of spatial flows. In addition, there may be more than one spatial flow on which transmit diversity is not performed, and the spatial flows that are obtained through transmit diversity may correspond to one or more original spatial flows.

For example, at least two spatial flows in the plurality of spatial flows are obtained by performing transmit diversity processing on one original spatial flow, and at least two spatial flows in the plurality of spatial flows are obtained by performing transmit diversity processing on another original spatial flow. In other words, the plurality of spatial flows are obtained by performing transmit diversity processing on at least two different original spatial flows. The original spatial flow corresponds to the first receive end device, and the another original spatial flow corresponds to a third receive end device, so that a same time-frequency resource is used for both transmit diversity and spatial multiplexing, thereby improving time-frequency resource utilization. Still using the foregoing example as an example, the first receive end device is the UE 0, the second receive end device is the UE 1, and the third receive end device is UE 2. Both the UE 0 and the UE 2 use the transmit-diversity-based beamforming transmission method. The UE 1 performs transmission by using CLSM. The UE 0 performs transmit-diversity-based beamforming transmission by using the port x+1 and the port x+2. The UE 1 performs CLSM transmission by using the ports x+3, ..., and y-2. The UE 2 performs transmit-diversity-based beamforming transmission by using the ports y-1 and y. In addition, the UE 0 and/or the UE 2 may perform CLSM transmission by using some ports. In other words, in spatial flows corresponding to same UE, some spatial flows are spatial flows that are obtained through transmit diversity, and a remaining spatial flow is a spatial flow on which transmit diversity is not performed.

In this embodiment, a plurality of spatial flows are precoded by using a plurality of precoding vectors, and different spatial flows correspond to different precoding vectors. Each spatial flow is associated with one DMRS, where the DMRS and the spatial flow are precoded by using a same precoding vector, the UE demodulates the spatial flow by using the DMRS, and the DMRS is identified by a DMRS port of the DMRS. It can be learned that each precoding vector corresponds to one DMRS port, and different precoding vectors correspond to different DMRS ports. The DMRS is used for channel demodulation. The transmit end device precodes DMRSs of the plurality of spatial flows, to obtain a plurality of precoded DMRSs, and sends the plurality of precoded DMRSs. Each spatial flow corresponds to one DMRS, and a precoded data stream that is obtained by precoding each spatial flow may be demodulated by using a DMRS that corresponds to the spatial flow. This is because a precoding vector used by each spatial flow is the same as a precoding vector used by a DMRS of the spatial flow, but transmit diversity processing does not need to be performed on the DMRS of the spatial flow. In other words, after transmit diversity is performed on an original spatial flow to obtain at least two spatial flows, these spatial flows are associated with respective DMRSs, and these DMRSs may be different from each other. At a receive end, a receive end device demodulates a received precoded data stream based on a DMRS that corresponds to a DMRS port, to obtain a spatial flow. If the at least two spatial flows are obtained by performing transmit diversity on an original spatial flow, after the spatial flows are obtained through demodulation, the original spatial flow further needs to be restored from the at least two spatial flows based on a transmit diversity manner in which a transmit end has generated the spatial flows.

In this embodiment, because the transmit end uses the transmit-diversity-based beamforming transmission method, when needing to perform data demodulation, the receive end device not only needs to learn a DMRS port number, but also needs to learn a transmit diversity processing manner used by the transmit end. The transmit end may send, to the receive end device by using downlink signaling, port information of the DMRS of each spatial flow and/or information about a transmit diversity processing manner used by the spatial flow. The receive end device performs data demodulation based on the port information of the DMRS of each spatial flow and/or the transmit diversity processing manner used by the spatial flow. The transmit end device may send, in the following several manners, the port information of the DMRS of the spatial flow and/or the information about the transmit diversity processing manner used by the spatial flow.

(1) Send, by using downlink signaling, a port identifier of the DMRS of each spatial flow and information about a transmit diversity processing manner of the spatial flows that are obtained through transmit diversity processing.

For example, a base station indicates, to UE 0 by using downlink signaling, that DMRS port identifiers sent by the base station are x+1 and x+2, and indicates, to the UE 0, that a transmit diversity processing manner used by the base station is SFTD. For another example, a base station indicates, to UE 0 by using downlink signaling, that DMRS port identifiers sent by the base station are x, x+1, x+2, and x+3, and indicates, to the UE, that a transmit diversity processing manner used by the base station is FSTD. When the transmit diversity processing manner is indicated to the UE by using downlink signaling, several fixed bits may be allocated to specify the transmit diversity processing manner. For example, two bits are used to indicate the transmit diversity processing manner, and the two bits may indicate four transmit diversity processing manners in total. For example, 00 represents SFTD, and 01 represents FSTD. Certainly, the transmit diversity processing manner may be indicated in another manner. When spatial flows of same UE include both spatial flows that are obtained through transmit diversity and spatial flows on which transmit diversity is not performed, spatial flows on which transmit diversity has been performed and a corresponding transmit diversity manner need to be indicated. In addition, the spatial flows on which transmit diversity is not performed further need to be indicated.

(2) Send a port identifier of the DMRS of each spatial flow by using downlink signaling, where a port or a port quantity of the DMRS of each spatial flow uniquely corresponds to one transmit diversity processing manner.

In this manner, a port identifier or a port quantity of a DMRS of a spatial flow may implicitly indicate a transmit diversity processing manner, and there is a mapping relationship between the port identifier or the port quantity and the transmit diversity processing manner. The port or the port quantity of the DMRS of each spatial flow uniquely corresponds to one transmit diversity processing manner. The receive end device determines the transmit diversity processing manner based on the port identifier or the port quantity of the DMRS and the mapping relationship. For example, the mapping relationship is as follows: SFTD needs to be used on a port x+1 and a port x+2, or SFTD needs to be used when two ports are used. When the receive end device learns, by using downlink signaling, that port identifiers of a DMRS of a spatial flow are x+1 and x+2, the receive end device determines, based on the mapping relationship, that a transmit diversity processing manner used by the transmit end device is SFTD.

(3) Send, by using downlink signaling, information about a transmit diversity processing manner of the spatial flows that are obtained through transmit diversity processing, where a transmit diversity processing manner used by each spatial flow uniquely corresponds to a group of DMRS ports.

The information about the transmit diversity processing manner may be an identifier of the transmit diversity processing manner, or the transmit diversity processing manner is indicated by using one or more bits. In this manner, a transmit diversity processing manner used by a DMRS of a spatial flow may implicitly indicate DMRS ports. In addition, there is a mapping relationship between a transmit diversity processing manner and port identifiers. A transmit diversity processing manner used by each spatial flow uniquely corresponds to a group of DMRS ports. The receive end device determines DMRS ports based on the mapping relationship and a transmit diversity processing manner that is used by a DMRS. For example, a base station indicates, to UE 0 by using downlink signaling, that a transmit diversity processing manner used by the base station is SFTD. The mapping relationship is as follows: A port x+1 and a port x+2 need to be used when transmit diversity processing is performed by using SFTD. Then, the UE 0 may learn, based on the mapping relationship and the transmit diversity processing manner that is indicated by the base station, that port numbers of a DMRS are x+1 and x+2.

(4) Send a port quantity of the DMRS of each spatial flow by using downlink signaling, where the port quantity of the DMRS of each spatial flow uniquely corresponds to one transmit diversity processing manner and a group of DMRS ports.

In this manner, a transmit diversity processing manner used by a spatial flow and DMRS ports of the spatial flow are implicitly indicated by using a port quantity of a DMRS of the spatial flow. In addition, there is a mapping relationship between a transmit diversity processing manner, a port quantity of a DMRS, and DMRS ports; and a port quantity of the DMRS of each spatial flow uniquely corresponds to one transmit diversity processing manner and a group of DMRS ports. The receive end device determines a transmit diversity processing manner and DMRS ports based on a port quantity of a DMRS and the mapping relationship. For example, a base station indicates, to UE by using downlink signaling, that a port quantity of a DMRS of a spatial flow is 2. The mapping relationship is as follows: When a quantity of used ports is 2, SFTD needs to be used for transmit diversity processing, and ports numbered x+1 and x+2 need to be used for a DMRS of a spatial flow. The UE determines, based on the mapping relationship and the port quantity, indicated by the base station, of the DMRS of the spatial flow, that a transmit diversity processing manner used by the spatial flow is SFTD, and port numbers of the DMRS of the spatial flow are x+1 and x+2.

(5) Send, by using downlink signaling, a port quantity of the DMRS of each spatial flow and information about a transmit diversity processing manner of the spatial flows that are obtained through transmit diversity processing, where the port quantity of the DMRS of each spatial flow and a transmit diversity processing manner that is used by each spatial flow together uniquely correspond to a group of DMRS ports.

In this manner, DMRS ports of a spatial flow are implicitly indicated by using a port quantity of a DMRS of the spatial flow and a transmit diversity processing manner that is used by the spatial flow. In addition, there is a mapping relationship between a transmit diversity processing manner, a port quantity of a DMRS, and DMRS ports. A port quantity of the DMRS of each spatial flow and a transmit diversity processing manner that is used by each spatial flow together uniquely correspond to a group of DMRS ports. The receive end device determines DMRS ports based on a port quantity of a DMRS, a transmit diversity processing manner that is used by a spatial flow, and the mapping relationship, where the port quantity of the DMRS and the transmit diversity processing manner that is used by the spatial flow are indicated by the transmit end device. For example, a base station indicates, to UE 0 by using downlink signaling, that a transmit diversity processing manner used by a spatial flow is SFTD and a port quantity of a DMRS of the spatial flow is 2. The mapping relationship is as follows: When a transmit diversity processing manner used by a spatial flow is SFTD and a port quantity of a DMRS of the spatial flow is 2, DMRS ports numbered x+1 and x+2 need to be used for the spatial flow.

It should be noted that, to more clearly describe the technical solutions provided in this application, a spatial flow obtained after layer mapping in the existing LTE standard is used to represent an original spatial flow or a spatial flow on which transmit diversity processing is not performed in this application. However, a person skilled in the art should understand that, a spatial flow in this application may generally mean any data stream (for example, a modulated symbol stream) that is obtained after processing such as coding and modulation and that needs to be precoded and transmitted, in addition to a spatial flow obtained after layer mapping in the LTE standard.

In this embodiment, the transmit end device precodes the plurality of spatial flows, to obtain the plurality of precoded data streams, and transmits the plurality of precoded data streams, where at least two spatial flows in the plurality of spatial flows are obtained by performing transmit diversity processing on one original spatial flow. In this way, some spatial flows in a plurality of spatial flows on a same time-frequency resource can be transmitted in a transmit-diversity-based beamforming transmission manner, and other spatial flows can be transmitted in a spatial multiplexing manner, thereby improving time-frequency resource utilization.

FIG. 3 is a flowchart of a data receiving method according to Embodiment 2 of this application. The method in this embodiment is performed by a receive end device. The receive end device may be a base station or UE. As shown in FIG. 3, the method in this embodiment includes the following steps:

  Step 201: Receive a plurality of precoded data streams, where the plurality of precoded data streams are obtained by precoding a plurality of spatial flows, and at least two spatial flows in the plurality of spatial flows are obtained by performing transmit diversity processing on one original spatial flow.
  Step 202: Restore the at least two spatial flows from the plurality of precoded data streams.
  Step 203: Restore the original spatial flow based on the at least two spatial flows.

The receive end device may receive a plurality of precoded data stream. Some precoded data streams have experienced transmit diversity processing, but other data streams do not experience transmit diversity processing. In addition, for a particular receive end device, some precoded data streams are interference information, and the receive end device determines, from the plurality of precoded data streams, a data stream needed by the receive end device. In this embodiment, the receive end device restores the at least two spatial flows from the plurality of precoded data streams, where the at least two spatial flows are obtained by performing transmit diversity processing on one original spatial flow, and the original spatial flow corresponds to a first receive end device. Therefore, the receive end device is the first receive end device.

To restore the at least two spatial flows from the plurality of precoded data streams, the receive end device needs to obtain precoded DMRSs of the at least two spatial flows and DMRS ports of the at least two spatial flows. Therefore, the receive end device further receives a plurality of precoded DMRSs. The plurality of precoded DMRSs are obtained by precoding DMRSs of the plurality of spatial flows, and different spatial flows correspond to different precoding vectors. Each spatial flow is associated with one DMRS, where the DMRS and the spatial flow are precoded by using a same precoding vector, the UE demodulates the spatial flow by using the DMRS, and the DMRS is identified by a DMRS port of the DMRS. Because the precoding vector of the DMRS is the same as the precoding vector of the spatial flow, the at least two spatial flows may be demodulated based on the precoded DMRSs of the at least two spatial flows and the DMRS ports of the at least two spatial flows. The at least two spatial flows are obtained by performing transmit diversity processing on a same original spatial flow, and the receive end device combines the at least two spatial flows based on a transmit diversity processing manner that is used by a transmit end device, to obtain the original spatial flow. A port number of a DMRS of a spatial flow and a transmit diversity processing manner that is used by the spatial flow may be sent by the transmit end device to the receive end device by using downlink signaling. For a specific sending manner, refer to description of Embodiment 1. Details are not described herein again.

In this embodiment, the plurality of precoded data streams are received, where the plurality of precoded data streams are obtained by precoding the plurality of spatial flows, and at least two spatial flows in the plurality of spatial flows are obtained by performing transmit diversity processing on one original spatial flow; and then, the at least two spatial flows are restored from the plurality of precoded data streams, and the original spatial flow is restored based on the at least two spatial flows. In this way, some spatial flows in a plurality of spatial flows on a same time-frequency resource can be transmitted in a transmit-diversity-based beamforming transmission manner, and other spatial flows can be transmitted in a spatial multiplexing manner, thereby improving time-frequency resource utilization.

FIG. 4 is a schematic structural diagram of a data sending apparatus according to Embodiment 3 of this application. The data sending apparatus is integrated into UE or a base station. As shown in FIG. 4, the data sending apparatus provided in this embodiment includes:

a processing module 11, configured to precode a plurality of spatial flows, to obtain a plurality of precoded data streams, where at least two spatial flows in the plurality of spatial flows are obtained by performing transmit diversity processing on one original spatial flow; and

a sending module 12, configured to transmit the plurality of precoded data streams.

Optionally, the original spatial flow corresponds to a first receive end device.

Optionally, at least one spatial flow in the plurality of spatial flows corresponds to a second receive end device.

Optionally, at least two spatial flows in the plurality of spatial flows are obtained by performing transmit diversity processing on another original spatial flow, and the another original spatial flow corresponds to a third receive end device.

Optionally, the transmit diversity processing is space-time transmit diversity processing, space-frequency transmit diversity processing, or space-time-frequency transmit diversity processing.

Optionally, different spatial flows correspond to different precoding vectors, each precoding vector corresponds to one DMRS port, and different precoding vectors correspond to different DMRS ports.

Optionally, the processing module 11 is further configured to: precode demodulation reference signals of the plurality of spatial flows, to obtain a plurality of precoded demodulation reference signals, where each spatial flow corresponds to one demodulation reference signal, and a precoding vector used by each spatial flow is the same as a precoding vector used by the demodulation reference signal of each spatial flow. Correspondingly, the sending module 12 is further configured to send the plurality of precoded demodulation reference signals.

The data sending apparatus in this embodiment may be configured to perform the method in Embodiment 1. Specific implementations and technical effects of the apparatus are similar to those of the method in Embodiment 1, and details are not described herein again.

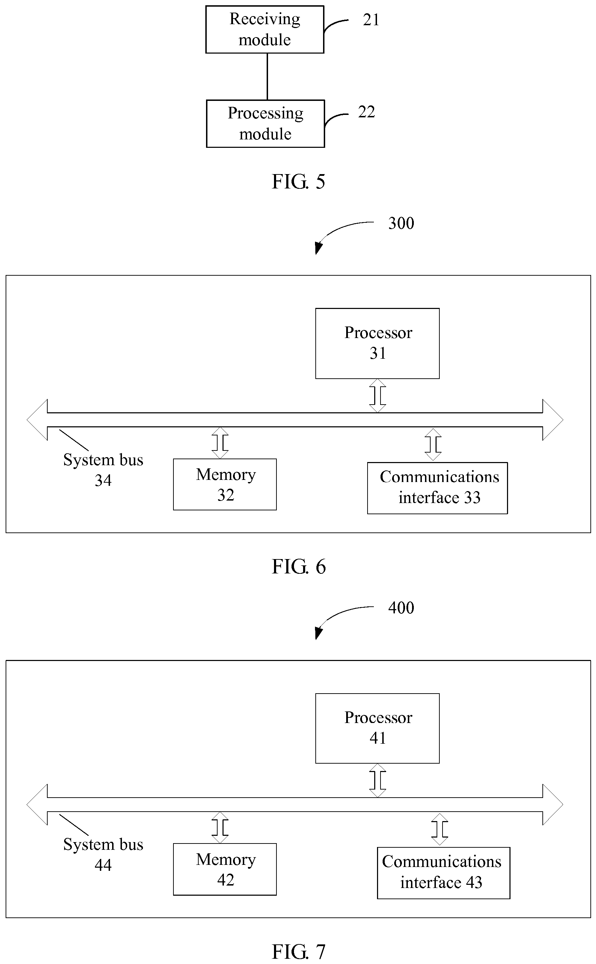

FIG. 5 is a schematic structural diagram of a data receiving apparatus according to Embodiment 4 of this application. The data receiving apparatus is integrated into UE or a base station. As shown in FIG. 5, the data receiving apparatus provided in this embodiment includes:

a receiving module 21, configured to receive a plurality of precoded data streams, where the plurality of precoded data streams are obtained by precoding a plurality of spatial flows, and at least two spatial flows in the plurality of spatial flows are obtained by performing transmit diversity processing on one original spatial flow; and

a processing module 22, configured to restore the at least two spatial flows from the plurality of precoded data streams, where the processing module 22 is further configured to restore the original spatial flow based on the at least two spatial flows.

Optionally, the original spatial flow corresponds to a first receive end device.

Optionally, at least one spatial flow in the plurality of spatial flows corresponds to a second receive end device.

Optionally, at least two spatial flows in the plurality of spatial flows are obtained by performing transmit diversity processing on another original spatial flow, and the another original spatial flow corresponds to a third receive end device.

Optionally, the transmit diversity processing is space-time transmit diversity processing, space-frequency transmit diversity processing, or space-time-frequency transmit diversity processing.

Optionally, different spatial flows correspond to different precoding vectors, each precoding vector corresponds to one DMRS port, and different precoding vectors correspond to different DMRS ports.

Optionally, the receiving module 21 is further configured to receive a plurality of precoded demodulation reference signals, where the plurality of precoded demodulation reference signals are obtained by precoding demodulation reference signals of the plurality of spatial flows, each spatial flow corresponds to one demodulation reference signal, and a precoding vector used by each spatial flow is the same as a precoding vector used by the demodulation reference signal of each spatial flow. Correspondingly, the processing module 22 is specifically configured to restore the at least two spatial flows from the plurality of precoded data streams based on precoded demodulation reference signals of the at least two spatial flows.

The data receiving apparatus in this embodiment may be configured to perform the method in Embodiment 2. Specific implementations and technical effects of the apparatus are similar to those of the method in Embodiment 2, and details are not described herein again.

FIG. 6 is a schematic structural diagram of a data sending apparatus according to Embodiment 5 of this application. As shown in FIG. 6, the data sending apparatus 300 provided in this embodiment includes a processor 31, a memory 32, a communications interface 33, and a system bus 34. The memory 32 and the communications interface 33 are connected to and communicate with the processor 31 by using the system bus 34. The memory 32 is configured to store a computer execution instruction. The communications interface 33 is configured to communicate with another device. The processor 31 is configured to run the computer execution instruction, to perform the following method:

precoding a plurality of spatial flows, to obtain a plurality of precoded data streams, where at least two spatial flows in the plurality of spatial flows are obtained by performing transmit diversity processing on one original spatial flow; and transmitting the plurality of precoded data streams.

The data sending apparatus in this embodiment may be configured to perform the method in Embodiment 1. Specific implementations and technical effects of the apparatus are similar to those of the method in Embodiment 1, and details are not described herein again.

FIG. 7 is a schematic structural diagram of a data receiving apparatus according to Embodiment 7 of this application. As shown in FIG. 7, a data sending apparatus 400 provided in this embodiment includes a processor 41, a memory 42, a communications interface 43, and a system bus 44. The memory 42 and the communications interface 43 are connected to and communicate with the processor 41 by using the system bus 44. The memory 42 is configured to store a computer execution instruction. The communications interface 43 is configured to communicate with another device. The processor 41 is configured to run the computer execution instruction, to perform the following method:

receiving a plurality of precoded data streams, where the plurality of precoded data streams are obtained by precoding a plurality of spatial flows, and at least two spatial flows in the plurality of spatial flows are obtained by performing transmit diversity processing on one original spatial flow;
restoring the at least two spatial flows from the plurality of precoded data streams; and
restoring the original spatial flow based on the at least two spatial flows.

The data receiving apparatus in this embodiment may be configured to perform the method in Embodiment 2. Specific implementations and technical effects of the apparatus are similar to those of the method in Embodiment 2, and details are not described herein again.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware combined with a software functional unit.

When the foregoing integrated unit is implemented in a form of a software functional unit, the integrated unit may be stored in a computer readable storage medium. The software functional unit is stored in a storage medium and includes several instructions for instructing a computer device (which may be a personal computer, a server, a network device, or the like) or a processor (English: processor) to perform some of the steps of the methods described in the embodiments of this application. The foregoing storage medium includes: any medium that can store program code, such as a USB flash drive, a removable hard disk, a read-only memory (English: Read-Only Memory, ROM for short), a random access memory (English: Random Access Memory, RAM for short), a magnetic disk, or an optical disc.

**Claims**

1. A data sending method, comprising:

   precoding a plurality of spatial flows, to obtain a plurality of precoded data streams, wherein at least two spatial flows in the plurality of spatial flows are obtained by performing transmit diversity processing on one original spatial flow; and transmitting the plurality of precoded data streams.

2. The method according to claim 1, wherein the original spatial flow corresponds to a first receive end device.

3. The method according to claim 1 or 2, wherein at least one spatial flow in the plurality of spatial flows corresponds to a second receive end device.

4. The method according to any one of claims 1 to 3, wherein at least two spatial flows in the plurality of spatial flows are obtained by performing transmit diversity processing on another original spatial flow, and the another original spatial flow corresponds to a third receive end device.

5. The method according to any one of claims 1 to 4, wherein the transmit diversity processing is space-time transmit diversity processing, space-frequency transmit diversity processing, or space-time-frequency transmit diversity processing.

6. The method according to any one of claims 1 to 5, wherein different spatial flows correspond to different precoding vectors, each precoding vector corresponds to one DMRS port, and different precoding vectors correspond to different DMRS ports.

7. The method according to any one of claims 1 to 6, further comprising:

   precoding demodulation reference signals of the plurality of spatial flows, to obtain a plurality of precoded demodulation reference signals, wherein each spatial flow corresponds to one demodulation reference signal, and a precoding vector used by each spatial flow is the same as a precoding vector used by the demodulation reference signal of each spatial flow; and sending the plurality of precoded demodulation reference signals.

8. A data receiving method, comprising:

   receiving a plurality of precoded data streams, wherein the plurality of precoded data streams are obtained by precoding a plurality of spatial flows, and at least two spatial flows in the plurality of spatial flows are obtained by performing transmit diversity processing on one original spatial flow; restoring the at least two spatial flows from the plurality of precoded data streams; and restoring the original spatial flow based on the at least two spatial flows.

9. The method according to claim 8, wherein the original spatial flow corresponds to a first receive end device.

10. The method according to claim 8 or 9, wherein at least one spatial flow in the plurality of spatial flows corresponds to a second receive end device.

11. The method according to any one of claims 8 to 10, wherein at least two spatial flows in the plurality of spatial flows are obtained by performing transmit diversity processing on another original spatial flow, and the another original spatial flow corresponds to a third receive end device.

12. The method according to any one of claims 8 to 11, wherein the transmit diversity processing is space-time transmit diversity processing, space-frequency transmit diversity processing, or space-time-frequency transmit diversity processing.

13. The method according to any one of claims 8 to 12, wherein different spatial flows correspond to different precoding vectors, each precoding vector corresponds to one DMRS port, and different precoding vectors correspond to different DMRS ports.

14. The method according to any one of claims 8 to 13, further comprising:

receiving a plurality of precoded demodulation reference signals, wherein the plurality of precoded demodulation reference signals are obtained by precoding demodulation reference signals of the plurality of spatial flows, each spatial flow corresponds to one demodulation reference signal, and a precoding vector used by each spatial flow is the same as a precoding vector used by the demodulation reference signal of each spatial flow; and
the restoring the at least two spatial flows from the plurality of precoded data streams comprises:
restoring the at least two spatial flows from the plurality of precoded data streams based on precoded demodulation reference signals of the at least two spatial flows.

15. A data sending apparatus, comprising:

a processing module, configured to precode a plurality of spatial flows, to obtain a plurality of precoded data streams, wherein at least two spatial flows in the plurality of spatial flows are obtained by performing transmit diversity processing on one original spatial flow; and
a sending module, configured to transmit the plurality of precoded data streams.

16. The apparatus according to claim 15, wherein the original spatial flow corresponds to a first receive end device.

17. The apparatus according to claim 15 or 16, wherein at least one spatial flow in the plurality of spatial flows corresponds to a second receive end device.

18. The apparatus according to any one of claims 15 to 17, wherein at least two spatial flows in the plurality of spatial flows are obtained by performing transmit diversity processing on another original spatial flow, and the another original spatial flow corresponds to a third receive end device.

19. The apparatus according to any one of claims 15 to 18, wherein the transmit diversity processing is space-time transmit diversity processing, space-frequency transmit diversity processing, or space-time-frequency transmit diversity processing.

20. The apparatus according to any one of claims 15 to 19, wherein different spatial flows correspond to different precoding vectors, each precoding vector corresponds to one DMRS port, and different precoding vectors correspond to different DMRS ports.

21. The apparatus according to any one of claims 15 to 20, wherein the processing module is further configured to:

precode demodulation reference signals of the plurality of spatial flows, to obtain a plurality of precoded demodulation reference signals, wherein each spatial flow corresponds to one demodulation reference signal, and a precoding vector used by each spatial flow is the same as a precoding vector used by the demodulation reference signal of each spatial flow; and
the sending module is further configured to send the plurality of precoded demodulation reference signals.

22. A data receiving apparatus, comprising:

a receiving module, configured to receive a plurality of precoded data streams, wherein the plurality of precoded data streams are obtained by precoding a plurality of spatial flows, and at least two spatial flows in the plurality of spatial flows are obtained by performing transmit diversity processing on one original spatial flow; and
a processing module, configured to restore the at least two spatial flows from the plurality of precoded data streams, wherein
the processing module is further configured to restore the original spatial flow based on the at least two spatial flows.

23. The apparatus according to claim 22, wherein the original spatial flow corresponds to a first receive end device.

24. The apparatus according to claim 22 or 23, wherein at least one spatial flow in the plurality of spatial flows corresponds to a second receive end device.

25. The apparatus according to any one of claims 22 to 24, wherein at least two spatial flows in the plurality of spatial flows are obtained by performing transmit diversity processing on another original spatial flow, and the another original spatial flow corresponds to a third receive end device.

26. The apparatus according to any one of claims 22 to 25, wherein the transmit diversity processing is space-time transmit diversity processing, space-frequency transmit diversity processing, or space-time-frequency transmit diversity processing.

**27.** The apparatus according to any one of claims 22 to 26, wherein different spatial flows correspond to different precoding vectors, each precoding vector corresponds to one DMRS port, and different precoding vectors correspond to different DMRS ports.

**28.** The apparatus according to any one of claims 22 to 27, wherein the receiving module is further configured to:

receive a plurality of precoded demodulation reference signals, wherein the plurality of precoded demodulation reference signals are obtained by precoding demodulation reference signals of the plurality of spatial flows, each spatial flow corresponds to one demodulation reference signal, and a precoding vector used by each spatial flow is the same as a precoding vector used by the demodulation reference signal of each spatial flow; and

the processing module is specifically configured to restore the at least two spatial flows from the plurality of precoded data streams based on precoded demodulation reference signals of the at least two spatial flows.

FIG. 1

Precode a plurality of spatial streams, to obtain a plurality of precoded data streams, where at least two spatial streams in the plurality of spatial streams are obtained by performing transmit diversity processing on one original spatial stream — 101

Transmit the plurality of precoded data streams — 102

FIG. 2

Receive a plurality of precoded data streams, where the plurality of precoded data streams are obtained by precoding a plurality of spatial streams, and at least two spatial streams in the plurality of spatial streams are obtained by performing transmit diversity processing on one original spatial stream — 201

Restore the at least two spatial streams from the plurality of precoded data streams — 202

Restore the original spatial stream based on the at least two spatial streams — 203

FIG. 3

Processing module — 11

Sending module — 12

FIG. 4

```
         ┌──────────────┐
         │  Receiving   │─── 21
         │   module     │
         └──────────────┘
                │
         ┌──────────────┐
         │  Processing  │─── 22
         │   module     │
         └──────────────┘
```

**FIG. 5**

300

```
┌─────────────────────────────────────────────────────┐
│                                                       │
│                    ┌──────────────┐                   │
│                    │  Processor   │                   │
│                    │     31       │                   │
│                    └──────────────┘                   │
│                          ⇕                            │
│   ◄───────────────────────────────────────────────►  │
│                    ⇕                    ⇕             │
│   System bus  ┌──────────┐      ┌──────────────────┐  │
│      34       │ Memory   │      │  Communications  │  │
│               │   32     │      │   interface 33   │  │
│               └──────────┘      └──────────────────┘  │
│                                                       │
└─────────────────────────────────────────────────────┘
```

**FIG. 6**

400

```
┌─────────────────────────────────────────────────────┐
│                                                       │
│                    ┌──────────────┐                   │
│                    │  Processor   │                   │
│                    │     41       │                   │
│                    └──────────────┘                   │
│                          ⇕                            │
│   ◄───────────────────────────────────────────────►  │
│                    ⇕                    ⇕             │
│   System bus  ┌──────────┐      ┌──────────────────┐  │
│      44       │ Memory   │      │  Communications  │  │
│               │   42     │      │   interface 43   │  │
│               └──────────┘      └──────────────────┘  │
│                                                       │
└─────────────────────────────────────────────────────┘
```

**FIG. 7**

## INTERNATIONAL SEARCH REPORT

| International application No. |
|---|
| **PCT/CN2017/090805** |

**A. CLASSIFICATION OF SUBJECT MATTER**

H04B 7/06 (2006.01) i

According to International Patent Classification (IPC) or to both national classification and IPC

**B. FIELDS SEARCHED**

Minimum documentation searched (classification system followed by classification symbols)

H04B 7/-

Documentation searched other than minimum documentation to the extent that such documents are included in the fields searched

Electronic data base consulted during the international search (name of data base and, where practicable, search terms used)

CPRSABS, CNTXT, VEN, CNKI: demodulation reference, transmission, transmit, diversity, space time, space frequency, space time frequency, beamform, precode, DMRS

**C. DOCUMENTS CONSIDERED TO BE RELEVANT**

| Category* | Citation of document, with indication, where appropriate, of the relevant passages | Relevant to claim No. |
|---|---|---|
| X | CN 101563861 A (QUALCOMM INC.), 21 October 2009 (21.10.2009), description, page 6, lines 8-20, and page 11, line 15 to page 13, line 5, and figures 2 and 4 | 1-5, 8-12, 15-19, 22-26 |
| Y | CN 101563861 A (QUALCOMM INC.), 21 October 2009 (21.10.2009), description, page 6, lines 8-20, and page 11, line 15 to page 13, line 5, and figures 2 and 4 | 6, 7, 13, 14, 20, 21, 27, 28 |
| Y | CN 102857458 A (ZTE CORP.), 02 January 2013 (02.01.2013), description, paragraph [0007] | 6, 7, 13, 14, 20, 21, 27, 28 |
| A | CN 104185960 A (SAMSUNG SDI CO., LTD.), 03 December 2014 (03.12.2014), the whole document | 1-28 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 August 2017 (04.08.2017) | **07 September 2017 (07.09.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Jing** Telephone No.: (86-10) **62088433** |

Form PCT/ISA/210 (second sheet) (July 2009)

## INTERNATIONAL SEARCH REPORT
### Information on patent family members

| International application No. |
|---|
| **PCT/CN2017/090805** |

| Patent Documents referred in the Report | Publication Date | Patent Family | Publication Date |
|---|---|---|---|
| CN 101563861 A | 21 October 2009 | MX 2009006679 A | 30 June 2009 |
| | | KR 20120132570 A | 05 December 2012 |
| | | JP 2010514377 A | 30 April 2010 |
| | | RU 2439805 C2 | 10 January 2012 |
| | | CA 2670840 C | 16 October 2012 |
| | | TWI 368405 B | 11 July 2012 |
| | | SG 152743 A1 | 29 July 2009 |
| | | IN 200902975 P4 | 21 August 2009 |
| | | JP 5774622 B2 | 09 September 2015 |
| | | US 9106296 B2 | 11 August 2015 |
| | | TW 200835202 A | 16 August 2008 |
| | | NO 20092599 A | 10 July 2009 |
| | | CA 2670840 A1 | 26 June 2008 |
| | | WO 2008077056 A1 | 26 June 2008 |
| | | AU 2007333714 A1 | 18 June 2009 |
| | | EP 2127136 A1 | 02 December 2009 |
| | | PH 12009501087 A | 26 June 2008 |
| | | RU 2009127753 A | 27 January 2011 |
| | | SG 152743 B | 31 March 2011 |
| | | IL 198939 A | 31 October 2012 |
| | | KR 20090091239 A | 26 August 2009 |
| | | MX 302638 B | 23 August 2012 |
| | | KR 1308573 B1 | 13 September 2013 |
| | | BR- 0721145 A2 PI | 01 April 2014 |
| | | VN 10012515 B | 25 April 2014 |
| | | MY 151491 A | 30 May 2014 |
| | | AU 2007333714 B2 | 09 February 2012 |
| | | JP 2013153473 A | 08 August 2013 |
| | | US 2008144738 A1 | 19 June 2008 |
| | | VN 27883 A | 25 November 2011 |
| | | CN 106411382 A | 15 February 2017 |
| | | PH 12009501087 B1 | 17 August 2012 |
| | | IN 277084 B | 11 November 2016 |
| CN 102857458 A | 02 January 2013 | None | |
| CN 104185960 A | 03 December 2014 | KR 20130054217 A | 24 May 2013 |
| | | US 9247537 B2 | 26 January 2016 |
| | | AU 2012337546 A1 | 08 May 2014 |
| | | EP 2781045 A1 | 24 September 2014 |
| | | RU 2014119694 | 20 November 2015 |
| | | CA 2855702 A1 | 23 May 2013 |
| | | AU 2012337546 B2 | 05 January 2017 |
| | | US 2013121276 A1 | 16 May 2013 |
| | | JP 2014533909 | 15 December 2014 |
| | | WO 2013073909 A1 | 23 May 2013 |

Form PCT/ISA/210 (patent family annex) (July 2009)